# EUROPÄISCHE PATENTSCHRIFT

(11) **EP 2 416 408 B1**
(45) Veröffentlichungstag und Bekanntmachung des Hinweises auf die Patenterteilung: **07.01.2015**
(21) Anmeldenummer: 11006410.2
(22) Anmeldetag: 04.08.2011
(51) Int. Cl.: H01M 2/30

(54) **Deckelteil für einen Akkumulator und Akkumulator mit einem solchen Deckelteil**
Lid section for an accumulator and accumulator with such a lid section
Partie de couvercle pour un accumulateur et accumulateur doté d'une telle partie de couvercle

(30) Priorität: 06.08.2010 DE 102010033645
(43) Veröffentlichungstag der Anmeldung: 08.02.2012
(73) Patentinhaber: VB Autobatterie GmbH & Co. KGaA, 30419 Hannover (DE)
(72) Erfinder: Streuer, Peter, 30559 Hannover (DE)
(74) Vertreter: Meissner, Bolte & Partner GbR

(56) Entgegenhaltungen:
- EP-B1- 1 453 124
- WO-A1-2010/127289
- DE-A1- 2 933 234

## Beschreibung

Die Erfindung betrifft ein Deckelteil für einen Akkumulator gemäß dem Oberbegriff des Patentanspruchs 1. Die Erfindung betrifft ferner einen Akkumulator mit einem Gehäuseteil, wenigstens einem in das Gehäuseteil eingesetzten Plattensatz, einem mit dem Plattensatz verbundenen Polschaft und einem solchen Akkumulatordeckel gemäß dem Anspruch 11.

Akkumulatoren für Fahrzeuge, insbesondere in Form sog. Starterbatterien, weisen in der Regel zwei Anschlusspole auf, an denen die Polklemmen des Fahrzeugs angeschlossen werden. Ein hierfür eingesetzter, bekannter Anschlusspol weist eine hülsenartige Anschlussbuchse sowie einen durch die Anschlussbuchse geführten Polschaft auf. Der Polschaft ist im Inneren des Akkumulators mit Elektrodenplatten eines Plattensatzes verbunden. Bei einem fertig hergestellten Akkumulator ist die Anschlussbuchse elektrisch leitend und flüssigkeits- und gasdicht mit dem Polschaft verbunden, in der Regel durch eine Verschweißung.

Bei der Herstellung eines Akkumulators werden in ein Gehäuseteil zunächst die Plattensätze mit den damit verbundenen Polschäften eingesetzt. Sodann wird ein mit Anschlussbuchsen versehendes Deckelteil auf das Gehäuseteil aufgesetzt. Hierbei kann es zu erhöhter Reibung und zu Hemmungen beim Einführen der Anschlussbuchsen auf die Polschäfte kommen, insbesondere wenn die Polschäfte leicht schräg stehen und nicht genau auf die Anschlussbuchsen ausgerichtet sind. Hierdurch wird die Fertigung des Akkumulators erschwert.

Aus der EP 1 453 124 B1 ist bekannt, zur Verringerung der Reibung zwischen Anschlussbuchse und Polschaft ein den Polschaft in Umfangsrichtung vollständig umgebendes Gleitelement vorzusehen. Diese Konstruktion hat sich im Grundsatz bewährt.

Der Erfindung liegt demgegenüber die Aufgabe zugrunde, ein Deckelteil für einen Akkumulator anzugeben, mit dem die Fertigung des Akkumulators, insbesondere beim Aufsetzen des Deckelteils auf das Gehäuseteil, weiter verbessert werden kann.

Diese Aufgabe wird durch die in den Ansprüchen 1 und 11 angegebene Erfindung gelöst. Die Unteransprüche geben vorteilhafte Weiterbildungen der Erfindung an.

Gemäß der Erfindung wird statt eines einzigen, sich über den vollen Umfang des Polschafts erstreckenden Gleitelements eine Mehrzahl von streifenförmigen, über den Innenumfang der Anschlussbuchse voneinander beabstandeten Gleitelementen vorgeschlagen. Dies erlaubt eine Verringerung der Auflagefläche zwischen den Gleitelementen und dem Polschaft und damit eine weitere Verringerung der störenden Reibung. Zudem können die streifenförmigen, voneinander beabstandeten Gleitelemente einfacher und billiger gefertigt werden. Durch die zwischen den Gleitelementen vorgesehenen Abstände werden zudem Freiräume geschaffen, die eine flexible Anpassung der einzelnen Gleitelemente beim Einführen des Polschafts ermöglichen. Auch hierdurch kann der Fertigungsablauf bei der Herstellung eines Akkumulators verbessert werden. Die streifenförmige Ausbildung der Gleitelemente hat den weiteren Vorteil, dass eine Ausrichtung eventuell schräg stehender Polschäfte weiter verbessert werden kann. Vorteilhaft erstrecken sich hiermit die Gleitelemente in Einführrichtung des Polschafts.

Der Polschaft sowie die Anschlussbuchse sind üblicherweise aus Blei gefertigt. Durch die Gleitelemente kann die bei der Berührung von zwei aus Blei hergestellten Teilen entstehende, relativ hohe Reibung erheblich reduziert werden.

Die Erfindung erlaubt es insgesamt, die störende Reibung beim Aufsetzen des Deckelteils auf das Gehäuseteil im Bereich der Polschäfte weitgehend zu minimieren und Hemmungen zu vermeiden. In Folge dessen kann ein eventuelles unerwünschtes Herunterdrücken von Polschäften beim Aufsetzen des Deckelteils vermieden werden.

Vorteilhaft sind die Gleitelemente über den Innenumfang des Anschlusspols so eng beieinander angeordnet und weisen eine derartige Dicke auf, dass das obere Ende des Polschafts nicht zwischen zwei Gleitelementen mit der Innenwand der Anschlussbuchse in Berührung kommen kann. Dadurch wird bewirkt, dass der Polschaft an den Gleitelementen entlang gleitend ausgerichtet wird und ohne Hemmung in den oberen Bereich der Anschlussbuchse eintauchen kann. Sodann kann die Anschlussbuchse mit dem Polschaft verschweißt werden.

Die nachfolgend erläuterten vorteilhaften Weiterbildungen der Erfindung können grundsätzlich für alle Gleitelemente oder auch nur für eine Untermenge der Gleitelemente realisiert werden, z. B. für eines, mehrere oder alle der Gleitelemente. Der Einfachheit halber sei daher grundsätzlich von "Gleitelementen" gesprochen. Dies schließt die Möglichkeit ein, dass die genannte Weiterbildung nur für eines der Gleitelemente realisiert wird, für mehrere der Gleitelemente oder für alle Gleitelemente.

Gemäß einer vorteilhaften Weiterbildung der Erfindung weisen die Gleitelemente die größte Abmessung in Längsrichtung der Anschlussbuchse auf. Die Längsrichtung der Anschlussbuchse entspricht bei einer rotationssymmetrisch ausgebildeten Anschlussbuchse insbesondere der Symmetrieachse der Anschlussbuchse. Die genannte Weiterbildung hat den Vorteil, dass eine relativ lange Führungsstrecke beim Einführen des Polschafts in die Anschlussbuchse vorhanden ist. Dies hat den Vorteil, dass ein sicheres, reibungsarmes Einführen des Polschafts in die Anschlussbuchse weiter verbessert wird.

Gemäß einer vorteilhaften Weiterbildung der Erfindung erstrecken sich die Gleitelemente in Längsrichtung der Anschlussbuchse wenigstens über den unteren Abschnitt der Anschlussbuchse, der in das Kunststoffmaterial des Deckelteils eingebettet ist. Hierdurch wird eine lange Führungsstrecke für den Polschaft realisiert, was ein einfaches und sicheres Einführen des Polschafts in die Anschlussbuchse gewährleistet.

Gemäß einer vorteilhaften Weiterbildung der Erfindung erstrecken sich die Gleitelemente in Längsrichtung der Anschlussbuchse wenigstens bis zu einem zum Inneren des Akkumulators gerichteten Ende der Anschlussbuchse, d. h. bis zu dem vom für den Anschluss einer Polklemme vorgesehenen Anschlussabschnitt der Anschlussbuchse fortweisenden Ende. Dies gewährleistet eine sichere, reibungsarme Führung und Ausrichtung des Polschafts bereits zu Beginn des Aufsetzvorgangs des Batteriedeckels auf das Gehäuseteil des Akkumulators.

Gemäß einer vorteilhaften Weiterbildung der Erfindung ragen die Gleitelemente von der Innenseite der Anschlussbuchse hervor, so dass ein Abstand zwischen der Innenseite der Anschlussbuchse und einem Polschaft im Bereich der Gleitelemente gebildet wird. Die Gleitelemente wirken hierbei vorteilhaft als Abstandshalter, so dass es nicht zu einem direkten Kontakt zwischen dem Polschaft und der Anschlussbuchse und damit zu unerwünschter Reibung kommen kann.

Gemäß einer vorteilhaften Weiterbildung der Erfindung sind die Gleitelemente in einer vom Inneren des Akkumulators fortweisenden Richtung, d. h. in Richtung zu dem Anschlussabschnitt für die Polklemme hin, spitz zulaufend ausgebildet. Die Gleitelemente können sich hierbei beispielsweise konisch oder bogenförmig zum Ende hin verjüngen. Dies hat den Vorteil, dass ein gleichmäßiger Übergang zu einem Innenabschnitt der Anschlussbuchse realisiert werden kann, in dem der Polschaft mit der Anschlussbuchse verschweißt werden soll. Hierdurch können insbesondere scharfkantige Übergänge von dem einen zum anderen Innenabschnitt der Anschlussbuchse vermieden werden, was den Vorteil haft, dass der Polschaft gleichmäßig und ohne die Gefahr des Verkantens oder Verhakens vollständig in die Anschlussbuchse eingeführt werden kann.

Gemäß einer vorteilhaften Weiterbildung der Erfindung liegen die Gleitelemente an der an der Innenseite der Anschlussbuchse gebildeten Innenwand an, d.h. auch bei noch nicht in die Anschlussbuchse eingeführtem Polschaft. Grundsätzlich können die Gleitelemente, zumindest bevor der Polschaft in die Anschlussbuchse vollständig eingeführt ist, auch etwas von der Innenseite der Anschlussbuchse beabstandet ausgebildet sein.

Gemäß einer vorteilhaften Weiterbildung der Erfindung sind die Gleitelemente aus Kunststoff hergestellt. Die Gleitelemente können beispielsweise als separate Einsatzelemente in Nuten an der Innenseite der Anschlussbuchse eingesetzt sein. Gemäß einer vorteilhaften Weiterbildung der Erfindung sind die Gleitelemente einstückig mit dem Deckelteil aus dem Kunststoffmaterial des Deckelteils gefertigt. Dies erlaubt eine weitere Vereinfachung der Herstellung von Akkumulatoren. Insbesondere müssen die Gleitelemente nicht einzeln, manuell oder maschinell, in die Anschlussbuchse eingesetzt werden. Stattdessen können die Gleitelemente bereits in der Spritzgießform, mit der das Deckelteil zusammen mit der eingebetteten Anschlussbuchse hergestellt wird, berücksichtigt sein.

Gemäß einer vorteilhaften Weiterbildung der Erfindung weist die Anschlussbuchse im Bereich der Gleitelemente eine größere Neigung der Innenwand gegenüber der Längsachse der Anschlussbuchse auf als in einem aus dem Deckelteil herausragenden Anschlussabschnitt, der zum Anschluss einer Polklemme an der Anschlussbuchse ausgebildet ist. Hierdurch kann in dem Bereich der Gleitelemente die Anschlussbuchse innen trichterförmig ausgebildet sein. Eine solche trichterförmige Ausbildung hat den Vorteil, dass das Einführen des Polschafts in die Anschlussbuchse weiter vereinfacht wird und sicherer gestaltet wird.

Die Neigung der Innenwand im Bereich der Gleitelemente kann konstant oder in Längsrichtung variabel sein. So kann die trichterförmige Ausbildung beispielsweise in Längsrichtung ein lineares Profil (Konus-Form) aufweisen oder bogenförmig sein, insbesondere einschalig hyperboloid. Vorteilhaft ist insbesondere eine bogenförmige Zunahme des Innenumfangs in dem Bereich der Gleitelemente, die in von dem Anschlussabschnitt fortweisender Richtung progressiv ist.

Die Erfindung wird nachfolgend anhand von Ausführungsbeispielen unter Verwendung von Zeichnungen näher erläutert.

Es zeigen
- Figur 1: ein Deckelteil mit einer Anschlussbuchse in Ansicht von unten und
- Figur 2: das Deckelteil mit der Anschlussbuchse gemäß Figur 1 im seitlichen Querschnitt und
- Figur 3: einen Ausschnitt eines Akkumulators und
- Figur 4: ein Deckelteil mit einer weiteren Ausführungsform einer Anschlussbuchse im seitlichen Querschnitt.

In den Figuren werden gleiche Bezugszeichen für einander entsprechende Elemente verwendet.

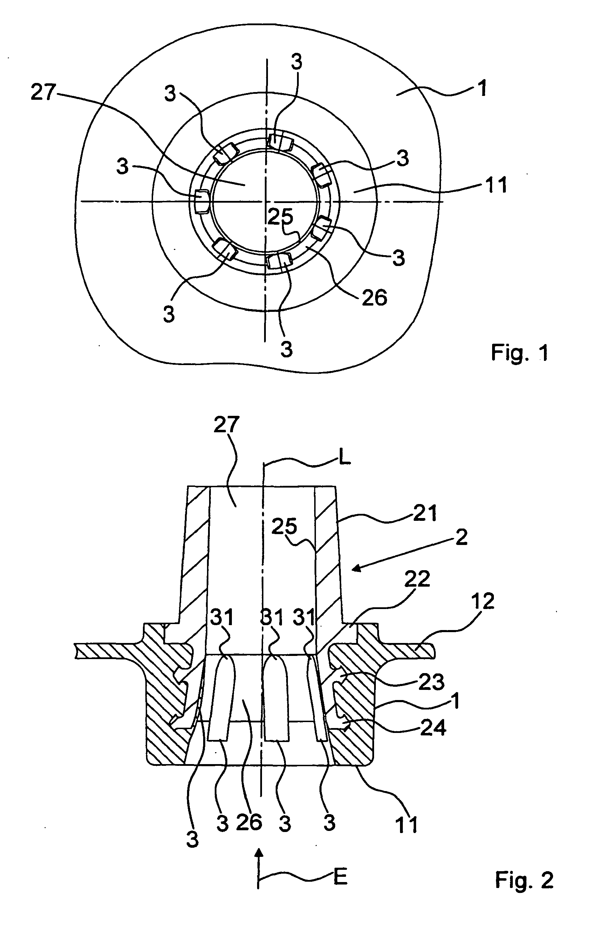

Die Figuren 1 und 2 zeigen ein Deckelteil 1 ausschnittsweise mit einer in das Kunststoffmaterial des Deckelteils 1 eingebetteten Anschlussbuchse 2 aus verschiedenen Ansichten. Die Figur 2 zeigt eine seitliche Schnittansicht, bei der das Innere des mit dem Deckelteil zu bildenden Akkumulators unterhalb einer Wand 12 des Deckelteils liegt. Die Einführrichtung eines Polschafts in die Anschlussbuchse 2 ist mit einem Pfeil E dargestellt.

Die Figur 1 zeigt das Deckelteil 1 mit der Anschlussbuchse 2 der Figur 1 in einer Ansicht von unten, d. h. aus der Richtung E.

Das Deckelteil 1 mit der Anschlussbuchse 2 sei nachfolgend anhand der Figuren 1 und 2 beschrieben.

Die Anschlussbuchse 2 weist an der Oberseite des Deckelteils 1 einen Anschlussabschnitt 21 auf. Der Anschlussabschnitt 21 ist an seiner Außenseite zum Anschluss einer Polklemme ausgebildet. Die Anschlussbuchse 2 geht ausgehend von dem Anschlussabschnitt 21 über in einen Befestigungsabschnitt, in dem zunächst eine ringförmige Umfangsvergrößerung 22 gebildet wird, die beispielsweise am Außenumfang zackenförmig ausgebildet sein kann, um eine Verdrehsicherung der Anschlussbuchse 2 gegenüber dem Deckelteil 1 zu realisieren. Unterhalb der ringförmigen Umfangsvergrößerung 22 wird ein Labyrinthabschnitt gebildet, in dem ringförmige Erhebungen 23, 24 mit hakenförmigem Profil vorgesehen sind. Die ringförmigen Erhebungen 23, 24 können alternativ auch ein trapezförmiges- oder rundes Profil ohne Haken haben. Durch den Labyrinthabschnitt wird eine sichere gas- und flüssigkeitsdichte Abdichtung zwischen der Anschlussbuchse 2 und dem Deckelteil 1 hergestellt.

Die Anschlussbuchse 2 ist hülsenförmig ausgebildet. Ein innerer Hohlraum 27 der Anschlussbuchse 2 weist einen oberen Abschnitt 25 und einen unteren Abschnitt 26 auf. In dem unteren Abschnitt 26 sind eine Mehrzahl von streifenförmigen Gleitelementen 3 angeordnet, die über den Innenumfang der Anschlussbuchse 2 voneinander beabstandet und gleichmäßig verteilt sind.

Der Innenraum 27 der Anschlussbuchse 2 kann zylindrisch, konisch oder bogenförmig verlaufende Innenwandabschnitte haben. Beispielsweise kann der obere Abschnitt 25 nahezu zylindrisch bzw. mit einem geringen Winkel zur Längsachse L konusförmig ausgebildet sein. Vorteilhaft ist der untere Abschnitt 26 mit einem größeren Winkel zur Längsachse L konusförmig oder bogenförmig ausgebildet. Insbesondere ist der untere Abschnitt 26 trichterförmig mit einer größeren Öffnung als der obere Abschnitt 25 ausgebildet.

In dem dargestellten Ausführungsbeispiel sind sieben Gleitelemente 3 mit jeweils gleicher Breite und gleichem Abstand voneinander über den Innenumfang des unteren Abschnitts 26 der Anschlussbuchse 2 angeordnet. Auch eine andere Anzahl von Gleitelementen ist vorteilhaft. Sinnvollerweise sind mindestens drei Gleitelemente 3 vorzusehen. Je größer die Anzahl von Gleitelementen ist, desto schmaler sind diese auszubilden. Wie insbesondere in der Figur 2 erkennbar ist, liegt das im linken Bereich dargestellte Gleitelement 3 an der Innenwand des Abschnitts 26 der Anschlussbuchse 2 an und wirkt aufgrund seiner Dicke von z. B. 0,4 mm als Abstandshalter für den einzuführenden Polschaft.

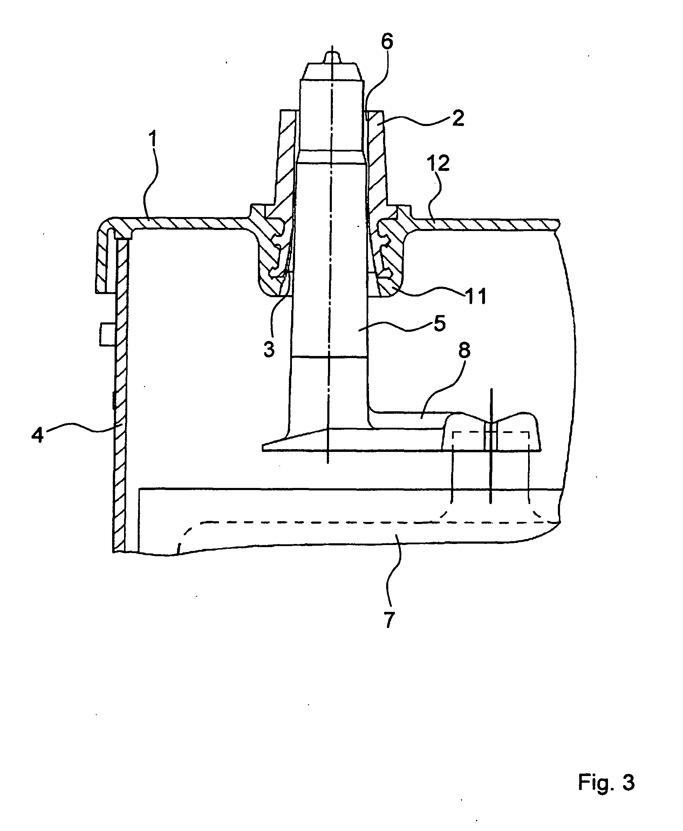

Die Figur 3 zeigt ausschnittsweise einen Akkumulator mit einem Gehäuseteil 4 und einem Deckelteil 1 der zuvor beschriebenen Art, das auf das Gehäuseteil 4 aufgesetzt ist. Im Inneren des Gehäuseteils 4 befinden sich Elektrodenplatten, die einen Plattensatz 7 bilden. Der Plattensatz 7 ist über einen Verbinder 8 mit einem Polschaft 5 elektrisch und mechanisch verbunden. Wie erkennbar ist, ist der Polschaft 5 in die Anschlussbuchse 2 eingeführt und steht auf der Außenseite des Akkumulators etwas aus der Anschlussbuchse 2 hervor. Der Polschaft 5 ist in diesem Bereich mit einem etwas geringeren Durchmesser ausgeführt als in den übrigen Bereichen. Hierdurch wird ein ringförmiger Raum 6 zwischen dem Polschaft 5 und der Anschlussbuchse 2 gebildet. Dieser Ringraum 6 dient zur elektrischen und mechanischen Verbindung des Polschafts 5 mit der Anschlussbuchse 2, z. B. durch Verschweißen.

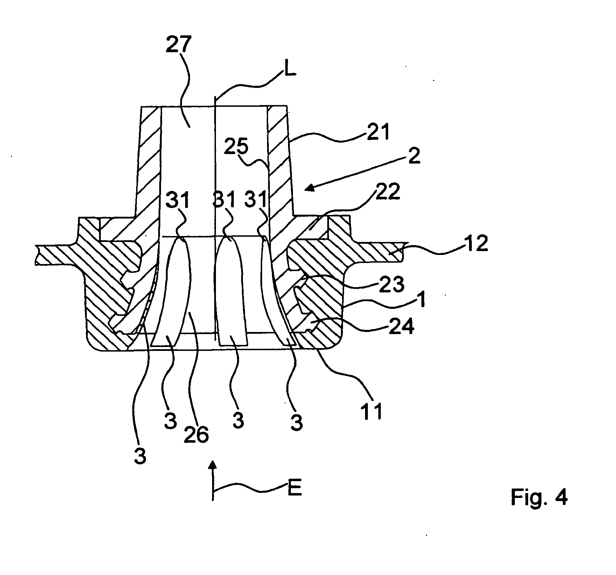

Die zuvor beschriebenen Ausführungsformen der Anschlussbuchse 2 weisen jeweils lineare Profile in Längsrichtung auf, das heißt entsprechende konische Abschnitte. Die Figur 4 zeigt eine Ausführungsform einer Anschlussbuchse 2 mit einem bogenförmigen Verlauf der Innenwand und der Außenwand in einem im Deckelteil 1 eingebetteten, unteren Abschnitt, der als Befestigungsabschnitt dient. Anschlussbuchsen gemäß Figur 4 werden insbesondere für den Nutzfahrzeugbereich eingesetzt. Wie erkennbar ist, verlaufen sowohl die Außenwand als auch die Innenwand in dem Befestigungsabschnitt zumindest in den Bereichen, in denen kein umlaufender Vorsprung 23, 24 angeordnet ist, parallel, so dass eine gleich bleibende Wandstärke in diesen Abschnitten gebildet wird. Der Außenumfang und der Innenumfang der Anschlussbuchse 2 nehmen in dem Befestigungsabschnitt nach unten hin, das heißt in Richtung zu der Einführseite der Polbuchse 5 hin, stetig zu. Die Kontur der Innenwand und/oder der Außenwand in Längsrichtung kann eine der bereits erwähnten bogenförmigen Konturen aufweisen. Wie erkennbar ist, sind die Gleitelemente 3 bei der Ausführungsform der Anschlussbuchse 2 gemäß Figur 4 in Längsrichtung gekrümmt ausgebildet und somit an den Verlauf der Innenwand in dem Befestigungsabschnitt angepasst.

## Patentansprüche

1. Deckelteil (1) für einen Akkumulator, wobei das Deckelteil (1) aus Kunststoff hergestellt ist und wenigstens eine hülsenartige Anschlussbuchse (2) zur elektrischen Kontaktierung des Akkumulators aufweist, wobei ein unterer Abschnitt (26) der Anschlussbuchse (2) in das Kunststoffmaterial des Deckelteils (1) eingebettet ist, **dadurch gekennzeichnet, dass** an der Innenseite der Anschlussbuchse (2) eine Mehrzahl von streifenförmigen, über den Innenumfang der Anschlussbuchse (2) voneinander beabstandeten reibungsverringernden Gleitelementen (3) angeordnet ist.

2. Deckelteil nach Anspruch 1, **dadurch gekennzeichnet, dass** eines, mehrere oder alle der Gleitelemente (3) die größte Abmessung in Längsrichtung (L) der Anschlussbuchse (2) aufweisen.

3. Deckelteil nach einem der vorhergehenden Ansprüche, **dadurch gekennzeichnet, dass** eines, mehrere oder alle der Gleitelemente (3) sich in Längsrichtung (L) der Anschlussbuchse (2) wenigstens über den unteren Abschnitt (26) der Anschlussbuchse (2) erstrecken.

4. Deckelteil nach einem der vorhergehenden Ansprüche, **dadurch gekennzeichnet, dass** eines, mehrere oder alle der Gleitelemente (3) sich in Längsrichtung (L) der Anschlussbuchse (2) wenigstens bis zu einem zum Inneren des Akkumulators gerichteten Ende der Anschlussbuchse (2) erstrecken.

5. Deckelteil nach einem der vorhergehenden Ansprüche, **dadurch gekennzeichnet, dass** eines, mehrere oder alle der Gleitelemente (3) von der Innenseite der Anschlussbuchse (2) hervorragen, so dass ein Abstand zwischen der Innenseite der Anschlussbuchse (2) und einem Polschaft (5) im Bereich der Gleitelemente (3) gebildet wird.

6. Deckelteil nach einem der vorhergehenden Ansprüche, **dadurch gekennzeichnet, dass** eines, mehrere oder alle der Gleitelemente (3) in einer vom Inneren des Akkumulators fortweisenden Richtung spitz zulaufend ausgebildet sind.

7. Deckelteil nach einem der vorhergehenden Ansprüche, **dadurch gekennzeichnet, dass** eines, mehrere oder alle der Gleitelemente (3) an der an der Innenseite der Anschlussbuchse (2) gebildeten Innenwand anliegen.

8. Deckelteil nach einem der vorhergehenden Ansprüche, **dadurch gekennzeichnet, dass** eines, mehrere oder alle der Gleitelemente (3) gleichmäßig über den Innenumfang der Anschlussbuchse (2) verteilt angeordnet sind.

9. Deckelteil nach einem der vorhergehenden Ansprüche, **dadurch gekennzeichnet, dass** eines, mehrere oder alle der Gleitelemente (3) einstückig mit dem Deckelteil (1) aus dem Kunststoffmaterial des Deckelteils (1) gefertigt sind.

10. Deckelteil nach einem der vorhergehenden Ansprüche, **dadurch gekennzeichnet, dass** die Anschlussbuchse (2) im Bereich der Gleitelemente (3) eine größere Neigung der Innenwand gegenüber der Längsachse (L) der Anschlussbuchse (2) aufweist als in einem aus dem Deckelteil (1) herausragenden Anschlussabschnitt (21, 25), der zum Anschluss einer Polklemme an der Anschlussbuchse (2) ausgebildet ist.

11. Akkumulator mit Gehäuseteil (4), wenigstens einem in das Gehäuseteil (4) eingesetzten Plattensatz (7), einem mit dem Plattensatz (7) verbundenen Polschaft (5) und einem Deckelteil (1) nach einem der vorhergehenden Ansprüche, wobei der Polschaft (5) in die Anschlussbuchse (2) zur Bildung eines Anschlusspols eingeführt ist.

## Claims

1. A cover part (1) for an accumulator, wherein the cover part (1) is made of plastic and comprises at least one sleeve-like connector socket (2) for making electrical contact with the accumulator, wherein a lower section (26) of the connector socket (2) is embedded in the plastic material of the cover part (1), **characterized in that** a plurality of strip-shaped friction-reducing sliding elements (3) are arranged at the inner side of the connector socket (2) spaced at a distance from one another over the inner circumference of said connector socket (2).

2. The cover part according to claim 1, **characterized in that** one, a plurality or all of the sliding elements (3) have their greatest dimension in the longitudinal direction (L) of the connector socket (2).

3. The cover part according to any one of the preceding claims, **characterized in that** one, a plurality or all of the sliding elements (3) extend in the longitudinal direction (L) of the connector socket (2) at least over the lower section (26) of said connector socket (2).

4. The cover part according to any one of the preceding claims, **characterized in that** one, a plurality or all of the sliding elements (3) extend in the longitudinal direction (L) of the connector socket (2) at least to one end of the connector socket (2) oriented toward the interior of the accumulator.

5. The cover part according to any one of the preceding claims, **characterized in that** one, a plurality or all of the sliding elements (3) project from the inner side of the connector socket (2) so that a space forms between the inner side of the connector socket (2) and a terminal post (5) in the area of the sliding elements (3).

6. The cover part according to any one of the preceding claims, **characterized in that** one, a plurality or all of the sliding elements (3) exhibit a form tapering away from the interior of the accumulator.

7. The cover part according to any one of the preceding claims, **characterized in that** one, a plurality or all of the sliding elements (3) abut against the inner wall formed on the inner side of the connector socket (2).

8. The cover part according to any one of the preceding claims, **characterized in that** one, a plurality or all of the sliding elements (3) are arranged in a uniform distribution over the inner circumference of the connector socket (2).

9. The cover part according to any one of the preceding claims, **characterized in that** one, a plurality or all of the sliding elements (3) are produced integrally with the cover part (1) from the plastic material of said cover part (1).

10. The cover part according to any one of the preceding claims, **characterized in that** connector socket (2) has a greater inclination to its inner wall relative to the longitudinal axis (L) of said connector socket (2) in the area of the sliding elements (3) than in a connector section (21, 25) projecting from the cover part (1) designed to connect a terminal clamp to the connector socket (2).

11. An accumulator comprising a housing part (4), at least one plate group (7) inserted into the housing part (4), a terminal post (5) connected to the plate group (7) and a cover part (1) in accordance with any one of the preceding claims, wherein the terminal post (5) is inserted into the connector socket (2) to form a terminal.

## Revendications

1. Partie formant couvercle (1) pour un accumulateur, ladite partie formant couvercle (1) étant fabriquée en matière plastique et comprenant au moins une douille de connexion (2) analogue à un manchon pour la mise en contact électrique de l'accumulateur, dans laquelle un tronçon inférieur (26) de la douille de connexion (2) est noyé dans la matière plastique de la partie formant couvercle (1), **caractérisée en ce qu'**une pluralité d'éléments de coulissement (3) réduisant la friction et écartés les uns des autres sur la périphérie intérieure de la douille de connexion (2) sont agencés sur la face intérieure de la douille de connexion (2).

2. Partie formant couvercle selon la revendication 1, **caractérisée en ce qu'**un, plusieurs ou tous les éléments de coulissement (3) présentent leur plus grande dimension dans la direction longitudinale (L) de la douille de connexion (2).

3. Partie formant couvercle selon l'une des revendications précédentes, **caractérisée en ce qu'**un, plusieurs ou tous les éléments de coulissement (3) s'étendent, en direction longitudinale (L) de la douille de connexion (2), au moins sur le tronçon inférieur (26) de la douille de connexion (2).

4. Partie formant couvercle selon l'une des revendications précédentes, **caractérisée en ce qu'**un, plusieurs ou tous les éléments de coulissement (3) s'étendent, en direction longitudinale (L) de la douille de connexion (2), au moins jusqu'à une extrémité, dirigée vers l'intérieur de l'accumulateur, de la douille de connexion (2).

5. Partie formant couvercle selon l'une des revendications précédentes, **caractérisée en ce qu'**un, plusieurs ou tous les éléments de coulissement (3) dépassent de la face intérieure de la douille de connexion (2), de sorte qu'il se forme une distance entre la face intérieure de la douille de connexion (2) et une tige polaire (5) dans la région des éléments de coulissement (3).

6. Partie formant couvercle selon l'une des revendications précédentes, **caractérisée en ce qu'**un, plusieurs ou tous les éléments de coulissement (3) sont réalisés de manière à converger en pointe dans une direction s'éloignant de l'intérieur de l'accumulateur.

7. Partie formant couvercle selon l'une des revendications précédentes, **caractérisée en ce qu'**un, plusieurs ou tous les éléments de coulissement (3) sont appliqués contre la paroi intérieure formée sur la face intérieure de la douille de connexion (2).

8. Partie formant couvercle selon l'une des revendications précédentes, **caractérisée en ce qu'**un, plusieurs ou tous les éléments de coulissement (3) sont agencés en répartition régulière sur la périphérie intérieure de la douille de connexion (2).

9. Partie formant couvercle selon l'une des revendications précédentes, **caractérisée en ce qu'**un, plusieurs ou tous les éléments de coulissement (3) sont fabriqués d'une seule pièce avec la partie formant couvercle (1) à partir de la matière plastique de la partie formant couvercle (1).

10. Partie formant couvercle selon l'une des revendications précédentes, **caractérisée en ce que** la douille de connexion (2) comporte, dans la région des éléments de coulissement (3), une paroi intérieure avec une inclinaison plus forte par rapport à l'axe longitudinal (L) de la douille de connexion (2) que dans un tronçon de connexion (21, 25), en saillie hors de la partie formant couvercle (1), qui est réalisé pour la connexion d'une borne polaire à la douille de connexion (2).

11. Accumulateur comprenant une partie formant boîtier (4), au moins un jeu de plaques (7) mis en place dans la partie formant boîtier (4), une tige polaire (5) reliée au jeu de plaques (7), et une partie formant couvercle (1) selon l'une des revendications précédentes, dans lequel la tige polaire (5) est introduite dans la douille de connexion (2) pour réaliser un pôle de connexion.
